# EUROPÄISCHE PATENTSCHRIFT

(11) **EP 3 788 865 B1**
(45) Veröffentlichungstag und Bekanntmachung des Hinweises auf die Patenterteilung: **03.11.2021**
(21) Anmeldenummer: 19195962.6
(22) Anmeldetag: 06.09.2019
(51) Int. Cl.: A01F 15/14

(54) **GARNKNOTER**
YARN KNOT
NOUEURS DE FIL

(43) Veröffentlichungstag der Anmeldung: 10.03.2021
(73) Patentinhaber: Rasspe Systemtechnik GmbH, 42929 Wermelskirchen (DE)
(72) Erfinder: FLANHARDT, Michael, 40764 Langenfeld (DE); SCHUMACHER, Heinrich Günter, 57612 Eichelhardt (DE); LÜTTICH, Hans-Robert, 01809 Dohna (DE); STEGLICH, Christian, 49832 Freren (DE); ACIMAS, Andreas, 42699 Solingen (DE); BALDSIEFEN, Karsten, 51789 Lindlar (DE)
(74) Vertreter: Neumann Müller Oberwalleney & Partner Patentanwälte

(56) Entgegenhaltungen:
- DE-C- 201 921
- GB-A- 497 474
- GB-A- 1 146 035
- US-A- 3 441 302

## Beschreibung

Die Erfindung betrifft einen Garnknoter, der einen Knoterhaken zur Bildung eines Knotens, eine Garnhalterung zum Klemmen von Garn mit einem Garnhalter, wobei der Garnhalter über einen Teilumfang des Mitnehmers mit diesem klemmend in Wirkverbindung steht, und einen relativ zum Garnhalter drehbaren Mitnehmer, wobei der Mitnehmer über den Umfang mindestens zwei Ausnehmungspaare aufweist mit jeweils einer in einer Drehrichtung des Mitnehmers vorderen Ausnehmung zur Aufnahme eines einzelnen Garnstrangs oder eines einzelnen Garnstrangpaares und einer hinteren Ausnehmung zur Aufnahme eines weiteren einzelnen Garnstrangs oder des einzelnen Garnstrangpaares, eine Garnzuführeinrichtung zum Zuführen von Garn über den Knoterhaken in die Garnhalterung und ein Garnmesser zum Durchtrennen von Garn aufweist.

Garnknoter oder -knüpfer werden vorwiegend in mobilen Packenpressen für die Bildung von Gebinden aus Stroh, Heu, Silage und ähnlichem Gut sowie in der Wertstoffverwendung, zum Beispiel für die Bündelung von Papier, Textilien, dünnen Blechen und dergleichen eingesetzt. Mit solchen Garnknotern ausgerüstete Binde- oder Bündeleinrichtungen können auch Bestandteil von Verpackungsanlagen für die Umschnürung von Packen, Ballen oder Bündel aus anderen hierfür geeigneten Materialien sein.

In stationären oder mobilen Packen- oder Großpackenpressen wird das Pressgut in einen im Querschnitt zumeist rechteckigen Presskanal verdichtet und zu einem rechteckigen Gutstrang gepresst. Dieser wird in quaderförmige Packen - gebräuchlich ist auch die Bezeichnung Vierkantballen - abgeteilt, deren Ober- und Unterseite sowie deren Außenseiten in Längsrichtung des Pressenkanals mit mehreren Garnsträngen umreift werden, die vor dem Ausstoß des Packens verknotet werden.

Ein eingangs beschriebener Garnknoter ist beispielsweise aus der US 3 441 302 A und der GB 1 146 035 A bekannt.

DE 86 06 383 U1 offenbar mehrere Garnknoter, die von einer Knoterwelle gemeinsam angetrieben werden. Jeder Garnknoter weist hierbei eine Antriebsscheibe auf, die auf die Knoterwelle aufgefädelt und drehfest mit dieser verbunden ist. Die Antriebsscheibe weist über Teilumfänge mehrere Verzahnungsabschnitte auf, die mit Ritzeln von Antriebskomponenten kämmen, um diese drehend anzutreiben. Die Verzahnungsabschnitte sind zu Gruppen von Verzahnungsabschnitten zusammengefasst, die zur Bildung eines Knotens dienen. Der in der DE 86 06 383 U1 beschriebene Garnknoter ist als Einfach-Knoter ausgeführt. Dies bedeutet, dass die Antriebsscheibe eine einzige Gruppe von Verzahnungsabschnitten aufweist, sodass bei einer vollen Umdrehung der Antriebsscheibe genau ein Knoten geknüpft wird. Bei einem sogenannten Doppelknoter weist die Antriebsscheibe zwei Gruppen von Verzahnungsabschnitten auf, sodass bei einer vollen Umdrehung der Antriebsscheibe zwei Knoten geknüpft werden.

Die Zuführung der notwendigen Garne, der Knotvorgang innerhalb des Garnknoters sowie die Mitwirkung der am Zustandekommen eines Knotens beteiligten Knoter- und Pressenelemente sind in dem Dokument DE 27 59 976 C1 im Einzelnen beschrieben, wobei es sich bei dem dort gezeigten Garnknoter um einen Doppelknoter handelt.

Ein Nachteil der beschriebenen Garnknoter nach dem Stand der Technik liegt darin, dass zwischen der Bildung zweier Knoten ein Garnrest entsteht, der nicht verknotet ist und lose als Abfall auf das Gebinde fällt.

Aufgabe der vorliegenden Erfindung ist es, einen Garnknoter und ein Verfahren zur Bildung von Knoten bereitzustellen, bei dem ein Garnrest vermieden wird.

Die Aufgabe wird durch einen Garnknoter gemäß Anspruch 1 gelöst. Beispielhafte Ausführungsformen ergeben sich aus den abhängigen Ansprüchen.

Bei einem Einfachknotern nimmt jede Ausnehmung hierbei genau einen einzigen Garnstrang auf. Der Garnhalter weist über den Umfang des Mitnehmers eine derartige Länge auf, dass in einer bestimmten Drehposition des Mitnehmers relativ zum Garnhalter der Garnhalter bei zwei Ausnehmungspaaren jeweils einen Garnstrang in einer Ausnehmung eines Ausnehmungspaare klemmt und einen anderen Garnstrang in einer weiteren Ausnehmung desselben Ausnehmungspaare freigibt. Somit ist das Garnmesser in der Lage, nur einen Garnstrang eines Ausnehmungspaares zu durchtrennen und den anderen Garnstrang desselben Ausnehmungspaares nicht zu durchtrennen und aus der Garnhalterung herauszuziehen. Damit wird gewährleistet, dass der Garnstrangabschnitt, der bei den Garnhalter nach dem Stand der Technik als Garnrest übrig bleibt und aus dem Garnknoter herausfällt, nicht abgetrennt wird, sondern aus der Garnhalterung herausgezogen wird und an dem gebildeten Knoten verbleibt. Dieser Garnstrangabschnitt wird in den Knoten eingebunden und bildet eine Schlaufe, wohingegen das abgetrennte Garnstrangende vollständig durch den Knoten hindurchgezogen wird, ohne eine Schlaufe zu bilden.

Bei einem Doppelknoter ist hierbei gewährleistet, dass nach dem Bilden des zweiten Knotens der vorher in der Garnhalterung geklemmte Abschnitt des Garnpaares wieder freigegeben wird und somit nicht von Garnmesser durchtrennt sondern aus der Garnhalterung herausgezogen wird. Dieser Abschnitt des Garnpaares wird in den Knoten eingebunden und bildet eine Schlaufe.

In einer beispielhaften Ausgestaltung des Garnknoters kann über den Umfang des Mitnehmers der Abstand zwischen der vorderen Ausnehmung und der hinteren Ausnehmung eines Ausnehmungspaares geringer sein als der Abstand zwischen zwei über den Umfang benachbarten bzw. aufeinanderfolgenden Ausnehmungspaaren. Somit werden die beiden einzelnen Garnstränge, die miteinander verknotet werden, über den Umfang des Mitnehmers nah zueinander gehalten. Hierdurch wird eine möglichst identische Zuführung der beiden einzelnen Garnstränge zu dem Knoterhaken gewährleistet, um die Knotenbildung nicht negativ zu beeinflussen.

Um die Übergabe des Garns zwischen der Bildung zweier Knotens zu erleichtern, kann der Garnknoter ferner eine Garnklemme aufweisen, die auf einer vom Knoterhaken abgewandten Seite des Mitnehmers angeordnet ist und dazu dient, Garn zwischen der hintere Ausnehmung des vorderen Ausnehmungspaares und der vorderen Ausnehmung des hinteren Ausnehmungspaares zu klemmen.

Bei einem Ausführungsbeispiel des Garnknoters kann vorgesehen sein, dass die vorderen Ausnehmungen der Ausnehmungspaare sich über einen größeren Teilumfang des Mitnehmers erstrecken als die hinteren Ausnehmungen.

Über den Umfang des Mitnehmers können vier Ausnehmungspaare gleichmäßig verteilt angeordnet sein.

Bei einem Ausführungsbeispiel des Garnknoters kann vorgesehen sein, dass der Garnknoter ferner eine drehend antreibbare Antriebsscheibe mit zumindest einer Gruppe von Verzahnungsabschnitten zum intermittierenden Antreiben des Knoterhakens, insbesondere einer Knoterhakenantriebswelle des Knoterhakens, und zum Antreiben des Mitnehmers, insbesondere einer Mitnehmerantriebswelle des Mitnehmer, aufweist. Die zumindest eine Gruppe von Verzahnungsabschnitten weist einen Knoterhakenverzahnungsabschnitt und einen Mitnehmerverzahnungsabschnitt mit jeweils mehreren Zähnen aufweist, wobei der Mitnehmerverzahnungsabschnitt über den Umfang eine zahnfreie Unterbrechung aufweisen.

Durch die zahnfreie Unterbrechung in dem Mitnehmerverzahnungsabschnitt wird ermöglicht, dass bei der Bildung eines Knotens der Mitnehmer über einen Winkelbereich derart verdreht wird, dass ein Garnstrang in die vordere Ausnehmung eines Ausnehmungspaares und anschließend in die hintere Ausnehmung desselben Ausnehmungspaares eingelegt werden kann.

Zum drehenden Antreiben können die Zähne des Knoterhakenverzahnungsabschnitts mit einem Ritzel des Knoterhakens und die Zähne des Mitnehmerverzahnungsabschnitts mit einem Ritzel des Mitnehmers kämmen.

Um den Garnknoter als Doppelknoter auszugestalten, kann die Antriebsscheibe zwei Gruppen von Verzahnungsabschnitten aufweisen, um zwei Knoten bei einer vollen Umdrehung der Antriebsscheibe zu bilden.

Um den Garnknoter als Einfach-Knoter auszugestalten, kann die Antriebsscheibe eine einzige Gruppe von Verzahnungsabschnitten aufweisen, um einen einzigen Knoten bei einer vollen Umdrehung der Antriebsscheibe zu bilden.

Die Aufgabe wird zudem durch ein Verfahren zur Bildung von zwei Knoten mittels eines oben beschriebenen Garnknoters, der als Doppelknoter ausgebildet ist, gelöst, wobei das Verfahren folgenden Verfahrensablauf aufweist:
1. Zuführen eines einzelnen Garnstrangpaares mittels der Garnzuführeinrichtung über den Knoterhaken in die hintere Ausnehmung des vorderen Ausnehmungspaares,
2. Drehen des Mitnehmers bis die hintere Ausnehmung des vorderen Ausnehmungspaares einen Klemmpositionsbereich erreicht, in dem der Garnhalter die hintere Ausnehmung des vorderen Ausnehmungspaares klemmend abdeckt, und gleichzeitiges Drehen des Knoterhakens um eine volle Umdrehung zur Bildung eines ersten Knotens in das einzelne Garnstrangpaar,
3. Durchtrennen des einzelnen Garnstrangpaares zwischen dem Knoterhaken und der hinteren Ausnehmung des vorderen Ausnehmungspaares der Garnhalterung mittels des Garnmessers während die hintere Ausnehmung des vorderen Ausnehmungspaares vom Garnhalter klemmend abgedeckt ist,
4. Weiterdrehen des Mitnehmers bis die vordere Ausnehmung des hinteren Ausnehmungspaares die Einlegeposition erreicht,
5. Zuführen des einzelnen Garnstrangpaares mittels der Garnzuführeinrichtung in die vordere Ausnehmung des hinteren Ausnehmungspaares,
6. Drehen des Knoterhakens um eine volle Umdrehung zum Bilden eines zweiten Knotens in dem einzelnen Garnstrangpaar solange zumindest eine der hinteren Ausnehmung des vorderen Ausnehmungspaares und vorderen Ausnehmung des hinteren Ausnehmungspaares vom Garnhalter klemmend abgedeckt ist,
7. Drehen des Mitnehmers bis die vordere Ausnehmung des hinteren Ausnehmungspaares eine Freigabeposition erreicht hat, in der der Garnhalter die vordere Ausnehmung des hinteren Ausnehmungspaares freigibt, und
8. Herausziehen des einzelnen Garnstrangpaares aus der Garnhalterung mittels des Garnmessers.

Damit wird gewährleistet, dass der Garnstrangabschnitt, der bei den Garnhalter nach dem Stand der Technik als Garnrest übrig bleibt und aus dem Garnknoter herausfällt, nicht abgetrennt wird, sondern aus der Garnhalterung herausgezogen wird und an dem gebildeten zweiten Knoten verbleibt. Dieser Garnstrangabschnitt wird in den Knoten eingebunden und bildet eine Schlaufe.

Die Aufgabe wird ferner durch ein Verfahren zur Bildung eines Knotens mittels eines oben beschriebenen Garnknoters, der als Einfachknoter ausgebildet ist, gelöst, wobei das Verfahren folgenden Verfahrensablauf aufweist:
1. Führen eines ersten einzelnen Garnstrangs über den Knoterhaken zu einem Gebinde, wobei der erste einzelne Garnstrang in der vordere Ausnehmung des vorderen Ausnehmungspaares zwischen dem Mitnehmer und dem Garnhalter geklemmt ist,
2. Zuführen eines zweiten einzelnen Garnstrangs mittels der Garnzuführeinrichtung über den Knoterhaken in die hintere Ausnehmung des vorderen Ausnehmungspaares,
3. Drehen des Mitnehmers bis die hintere Ausnehmung des vorderen Ausnehmungspaares einen Klemmpositionsbereich erreicht, in dem der Garnhalter die hintere Ausnehmung des vorderen Ausnehmungspaares klemmend abdeckt, und gleichzeitiges Drehen des Knoterhakens um eine volle Umdrehung zur Bildung eines gemeinsamen Knotens in beide Garnstränge,
4. Weiterdrehen des Mitnehmers bis die vordere Ausnehmung des hinteren Ausnehmungspaares die Einlegeposition erreicht,
5. Zuführen des zweiten einzelnen Garnstrangs mittels der Garnzuführeinrichtung in die vordere Ausnehmung des hinteren Ausnehmungspaares,
6. Drehen des Mitnehmers bis die vordere Ausnehmung des vorderen Ausnehmungspaares eine Freigabeposition erreicht, in der der Garnhalter die vordere Ausnehmung des vorderen Ausnehmungspaares freigibt, und die vordere Ausnehmung des hinteren Ausnehmungspaares den Klemmpositionsbereich erreicht,
7. Durchtrennen des zweiten Garnstrangs zwischen dem Knoterhaken und der Garnhalterung mittels des Garnmessers und
8. Herausziehen des ersten Garnstrangs aus der Garnhalterung mittels des Garnmessers.

Damit wird gewährleistet, dass der Garnstrangabschnitt, der bei den Garnhalter nach dem Stand der Technik als Garnrest übrig bleibt und aus dem Garnknoter herausfällt, nicht abgetrennt wird, sondern aus der Garnhalterung herausgezogen wird und an dem gebildeten Knoten verbleibt. Dieser Garnstrangabschnitt wird in den Knoten eingebunden und bildet eine Schlaufe, wohingegen das abgetrennte Garnstrangende vollständig durch den Knoten hindurchgezogen wird, ohne eine Schlaufe zu bilden.

Beispielhafte Ausführungsformen der Erfindung werden im Folgenden anhand der Zeichnungen näher erläutert. Hierin zeigen
- Figur 1: eine Seitenansicht in Richtung der Achse der Knoterwelle eines auf einer Ballenpresse befestigten Garnknoters (Doppelknoters) zur Bildung zweier Knoten,
- Figur 2: eine perspektivische Ansicht eines Garnknoters (Einfachknoters) zur Bildung eines Knotens,
- Figur 3: eine perspektivische Ansicht eines Mitnehmers des Garnknoters gemäß Figur 1,
- Figur 4: eine Frontansicht des Mitnehmers gemäß Figur 2,
- Figur 5: eine perspektivische Ansicht eines Garnhalters des Garnknoters gemäß Figur 1,
- Figur 6: eine Frontansicht der Garnhalterung mit einem Mitnehmer und einem Garnhalter gemäß der Figuren 3 bis 5,
- Figur 7: eine perspektivische Ansicht eines weiteren Ausführungsbeispiels einer Garnhalterung mit einem passivem Klemmelement,
- Figur 8: eine schematische Darstellung einer ersten Stellung des Mitnehmers relativ zum Garnhalter, wobei der Garnknoter als Doppelknoter ausgebildet ist,
- Figur 9: eine schematische Darstellung gemäß Figur 5, wobei der Mitnehmer in einer zweiten Stellung relativ zum Garnhalter dargestellt ist,
- Figur 10: eine schematische Darstellung gemäß Figur 5, wobei der Mitnehmer in einer dritten Stellung relativ zum Garnhalter dargestellt ist,
- Figur 11: eine schematische Darstellung gemäß Figur 5, wobei der Mitnehmer in einer vierten Stellung relativ zum Garnhalter dargestellt ist,
- Figur 12: eine schematische Darstellung einer ersten Stellung des Mitnehmers relativ zum Garnhalter, wobei der Garnknoter als Einfachknoter ausgebildet ist,
- Figur 13: eine schematische Darstellung gemäß Figur 9, wobei der Mitnehmer in einer zweiten Stellung relativ zum Garnhalter dargestellt ist,
- Figur 14: eine schematische Darstellung gemäß Figur 9, wobei der Mitnehmer in einer dritten Stellung relativ zum Garnhalter dargestellt ist,
- Figur 15: eine schematische Darstellung gemäß Figur 9, wobei der Mitnehmer in einer vierten Stellung relativ zum Garnhalter dargestellt, und
- Figur 16: eine schematische Darstellung gemäß Figur 9, wobei der Mitnehmer in einer fünften Stellung relativ zum Garnhalter dargestellt ist,

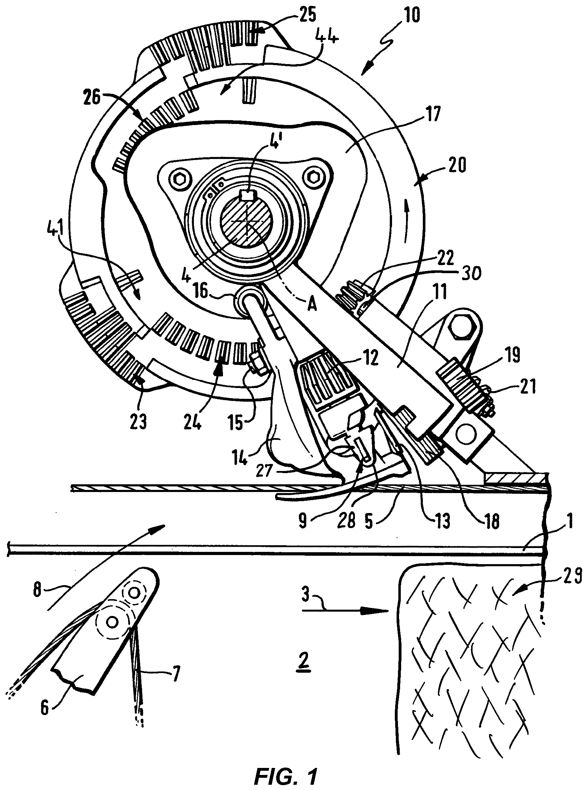

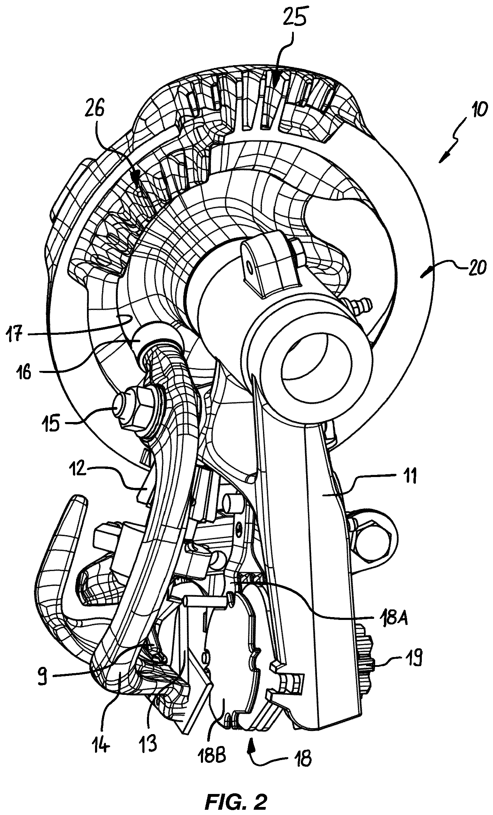

Die Figur 1 zeigt ein erstes Ausführungsbeispiel eines Garnknoters 10, der als Doppelknoter zur Herstellung zweier Knoten ausgebildet ist. Figur 2 zeigt ein zweites Ausführungsbeispiel eines Garnknoters 10, der als Einfachknoter zur Herstellung eines Knotens ausgebildet ist. Übereinstimmende Bauteile sind mit den gleichen Bezugszeichen versehen und werden im Folgenden gemeinsam beschrieben, wobei auf Unterschiede speziell eingegangen wird.

In Figur 1 ist eine obere Wandung 1 eines Pressenkanals 2 wiedergegeben, durch den Pressgut, z.B. Stroh, in Förderrichtung 3 gefördert wird, wobei ein Pressballen 29 aus Pressgut gebildet wird. Oberhalb der oberen Wandung 1 ist eine sich quer über die Breite des Pressenkanals 2 erstreckende Knoterwelle 4 um eine Achse A drehbar gelagert, auf der, je nach Breite des Pressenkanals 2 mehrere Garnknoter 10 angeordnet sein können. Jedem Garnknoter 10 ist eine in einer vertikalen Längsebene im rechten Winkel zur Achse A um den Pressballen 29 gelegte Bindegarnschlaufe bzw. -umreifung aus einem ersten Garnstrang 5 und einem zweiten Garnstrang 7 zugeordnet, die in dem Ausführungsbeispiel der Figur 1 durch die Bildung zweier Knoten geschlossen wird, die durch den Garnknoter 10 (Doppelknoter) hergestellt werden. Von der in der Förderrichtung 3 voreilenden Stirnseite (nicht dargestellt) des Pressballens 29, die sich in der in Figur 1 gezeigten Darstellung rechts vom Garnknoter 10 befindet, kommt der über die Oberseite des Pressballens 29 laufende erste Garnstrang 5 des Bindegarns. Der erste Garnstrang 5 wird durch nicht dargestellte, in Figur 1 links vom Garnknoter 10 angeordnete Mittel stramm gehalten. (Bei Einfachknotern gemäß Figur 2 wird ein Abschnitt des ersten Garnstrangs auch während der Pressphase in einer Garnhalterung des Garnknoters geklemmt.) Bei Doppelknotern gemäß Figur 1 wird ein Strangabschnitt durch außerhalb des Garnknoters 10 angeordnete Mittel gespannt. Eine Pressennadel 6 führt um die rückwärtige Stirnseite des Pressballens 29 von unten einen zweiten Garnstrang 7 des Bindegarns in Richtung des Pfeiles 8 hoch, so dass der zweite Garnstrang 7 im Bereich des Garnknoters 10 mit dem ersten Garnstrang 5 zu einem Garnstrangpaar zusammengebracht und verknotet werden kann.

Der Garnknoter 10 umfasst einen Knoterhaken 9, der in einem Knoterrahmen 11 um eine zur Knoterwelle 4 quer, vorzugsweise radial, gemäß Figur 1 schräg aufwärts, gerichtete Achse B drehbar und über ein Ritzel 12 um diese Achse B antreibbar ist.

Ein Garnmesser 13 ist quer zu den Garnsträngen 5, 7 beweglich angeordnet, um das Garn nach der Knotenbildung abzuschneiden. Das Garnmesser 13 ist an einem Messerhebel 14 angebracht, der um eine Achse E eines Wellenzapfens 15 in einem Lager im Knoterrahmen 11 schwenkbar gelagert ist und dabei durch eine Rolle 16 bewegt wird, die sich in einer Nut 17 einer Antriebsscheibe 20 verlagert.

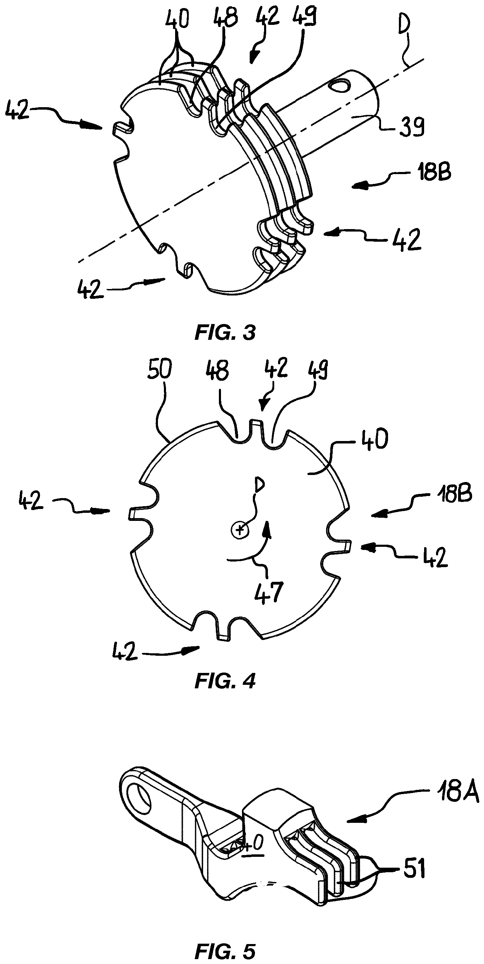

Eine Garnhalterung 18 hält die Garnstränge 5, 7 während bestimmter Arbeitsphasen des Knoterhakens 9 und des Garnmessers 13 in Position. Die Garnhalterung 18 ist um eine, unter etwa 45° nach vorn in einer vertikalen Ebene geneigte Achse D drehbar. Die Garnhalterung 18 umfasst einen Garnhalter 18A (Figur 5) und einen Mitnehmer 18B (Figuren 3 und 4), der drehend angetrieben ist und mit einem Schaft 39 in einem Lager am Knoterrahmen 11 gelagert ist. Der Antrieb des Mitnehmers 18B erfolgt über ein Ritzel 19, das mit einer Schnecke 21 in Eingriff steht, die von einem Ritzel 22 antreibbar ist. Die Schnecke 21 sitzt an einem Ende einer Ritzelwelle 30, an deren anderem Ende das Ritzel 22 befestigt ist.

Die Ritzel 12, 22 werden bei dem Garnknoter 10 gemäß Figur 2 in Form eines Einfachknotern, die bei einer Umdrehung der Antriebsscheibe 20 nur einen Knoten erzeugen, von jeweils einem Verzahnungsabschnitt 25, 26 auf der Antriebsscheibe 20 angetrieben. Das Bindeverfahren ist im Einzelnen in der EP 0 237 771 A1 näher beschrieben.

Bei Doppelknotern gemäß dem gezeigten Ausführungsbeispiel nach Figur 1 werden bei einer Umdrehung der Antriebsscheibe 20 zwei Knoten erzeugt. Hierbei werden die Ritzel 12, 22 durch zwei Gruppen, im gezeigten Ausführungsbeispiel von Paaren, von Verzahnungsabschnitten 23, 24 bzw. 25, 26 angetrieben, die auf der in Figur 1 dem Betrachter zugewandten Flachseite der Antriebsscheibe 20 im Bereich deren äußeren Randes angeordnet sind. Die Verzahnungsabschnitte 24, 26 (Mitnehmerverzahnungsabschnitte) sind untereinander gleich und liegen radial etwas weiter innen, so dass sie bei der Drehung der Antriebsscheibe 20 nur mit dem Ritzel 22 zum Antreiben des Mitnehmers 18B in Eingriff kommen können. Die Verzahnungsabschnitte 23, 25 (Knoterhakenverzahnungsabschnitte) sind ebenfalls untereinander gleich und liegen radial ganz außen und treiben das Ritzel 12 zum Antreiben des Knoterhakens 9 an.

Die Verzahnung Abschnitte 23, 24, 25, 26 weisen jeweils mehrere Zähne auf. Die Mitnehmerverzahnungsabschnitte 24, 26 weisen hierbei eine zahnfreie Unterbrechung 41, 44 auf, sodass der Mitnehmer bei einem vollständigen Passieren eines der Mitnehmerverzahnungsabschnitte 24, 26 kurzzeitig angehalten wird. Dies ist erforderlich, da wie nachfolgend noch erläutert wird, der Mitnehmer über seinen Umfang mehrere Ausnehmungspaare aufweist und über einen Abschnitt des jeweiligen Mitnehmerverzahnungsabschnitts 24, 26 der Mitnehmer von einem Ausnehmungspaar zum nächsten Ausnehmungspaar gedreht wird. Beim Drehen von einer Ausnehmung eines Ausnehmungspaares zu einer weiteren Ausnehmung desselben Ausnehmungspaares ist insbesondere bei einem Doppelknoter eine Verzögerung des Mitnehmers erforderlich, damit die übrigen angetriebenen Bauteile in der passenden Reihenfolge zum Passenden Zeitpunkt mit dem Mitnehmer zusammenwirken.

Die Verzahnungsabschnitte 25, 26 folgen im Übrigen den Verzahnungsabschnitten 23, 24 bei einer Drehung der Antriebsscheibe 20 entgegen dem Uhrzeigersinn um einen Winkel von etwa 115° in Umfangsrichtung nach. Die Verzahnungsabschnitte 23, 25 erstrecken sich über einen Winkel von etwa 30°, die Verzahnungsabschnitte 24, 26 um einen Winkel von etwa 40°.

Der in Figur 1 dargestellte Garnknoter 10 vollführt bei einer Umdrehung der Antriebsscheibe 20 hintereinander zwei Verknotungen. Ein erster Knoten verbindet den hinter an der rückwärtigen Stirnseite des Pressballens 29 hochkommenden unterer zweiten Garnstrang 7 mit dem oberen ersten Garnstrang 5, wodurch eine geschlossene Bindegarnschlaufe gebildet wird, die den Pressballen 29 umschlingt. Ein zweiter Knoten verbindet den an der vorderen Stirnseite des nachfolgenden Pressballens hochkommenden Garnstrang mit dem auf der Oberseite des nachfolgenden Pressballens laufenden Garnstrang, wodurch eine neue Bindegarnschlaufe für den neu zu bildenden Pressballen gebildet wird, in den der Pressballen eingepresst wird. Zwischen den Knoten wird das Bindegarn abgetrennt, so dass die aufeinanderfolgenden Pressballen voneinander getrennt sind.

Der in Figur 2 dargestellte Garnknoter 10 vollführt bei einer Umdrehung der Antriebsscheibe 20 eine Verknotung. Hierbei wird nur ein unterer Garnstrang 7 verwendet. Eine Garnrolle für einen oberen Garnstrang, wie bei Doppelknotern, ist nicht vorhanden. Der untere Garnstrang 7 wird von unten mittels der Pressennadel nach oben dem Garnknoter 10 zugeführt. Dort wird er geklemmt und die Pressennadel fährt wieder nach unten. In die so aufgespannte Garnschlaufe wird der Pressballen 29 hineingepresst. Nach Fertigstellung des Pressballen 29 führt die Pressennadel den unteren Garnstrang 7 an der rückwärtigen Stirnseite des Pressballens 29 nach oben zum Garnknoter 10, der das im Garnknoter 10 geklemmte Ende des Garnstrangs 7 mit dem von unten zugeführten Ende des Garnstrangs 7 verknotet, um den fertigen Pressballen 29 mit Garn zu umreifen. Hierbei wird der Garnstrang 7 durchtrennt und des freie Ende des Garnstrangs 7 im Garnknoter 10 festgeklemmt, sodass eine weitere Garnschlaufe gebildet ist, in die der nachfolgende Pressballen eingepresst werden kann.

Der Knoterhaken weist ein Knotermaul auf, das durch einen Hakenteil 27 und eine Knoterzunge 28 gebildet ist Die Knoterzunge 28 bildet einen um eine Schwenkachse schwenkbar gelagerten zweiarmigen Hebel dessen einer Arm (Zungenteil) mit dem Hakenteil 27 des Knoterhakens 9 unter Bildung des Knotermauls zusammenwirkt und an dessen anderem Arm eine (hier nicht dargestellte) Zungenrolle drehbar gelagert ist.

Das Öffnen des Knotermauls wird dadurch bewerkstelligt, dass bei der Drehung des Knoterhakens 9 die Zungenrolle über eine (hier nicht dargestellte) Nockenfläche läuft, wodurch die Zungenrolle angehoben und das Zungenteil vom Hakenteil 27 angehoben wird.

Figur 3 zeigt den Mitnehmer 18B in einer perspektivischen Darstellung und die Figur 4 zeigt den Mitnehmer 18B in einer Frontansicht in Richtung der Drehachse die, wobei die Figuren 3 und 4 im Folgenden zusammen beschrieben werden.

Der Mitnehmer 18B umfasst drei Mitnehmerscheiben 40, die mit dem Schaft 39 verbunden sind und in Richtung der Achse die deckungsgleich nebeneinander und beabstandet zueinander angeordnet sind. Der Mitnehmer 18B ist in einer Drehrichtung 47 (Figur 4) drehend antreibbar.

Die Mitnehmerscheiben 40 weisen jeweils vier Ausnehmungspaare 42 auf. Jedes Ausnehmungspaar 42 weist eine in Drehrichtung 47 des Mitnehmers 18B vordere Ausnehmung 48 und eine in Drehrichtung 47 des Mitnehmers 18B hintere Ausnehmung 49 auf. Die Ausnehmungen 48, 49 gehen von einer Außenumfangskante 50 der jeweiligen Mitnehmerscheibe 40 aus und verlaufen nach innen. Über den Umfang der jeweiligen Mitnehmerscheibe 40 betrachtet, ist der Abstand zwischen der vorderen Ausnehmung 48 und der hinteren Ausnehmung 49 eines Ausnehmungspaares 42 geringer als der Abstand zwischen zwei benachbarten Ausnehmungspaaren 42.

Figur 5 zeigt eine perspektivische Ansicht des Garnhalters 18A. Der Garnhalter weist drei parallel und beabstandet zueinander angeordnete Lamellen 51 auf. Im montierten Zustand kämmen die Lamellen 51 des Garnhalters 18A mit den Mitnehmerscheiben 40 des Mitnehmers 18B über einen begrenzten Umfangsabschnitt der Mitnehmerscheiben 40.

Somit lässt sich Garn zwischen den Mitnehmerscheiben 40 und den Lamellen 51 einklemmen. Hierzu können Garnstränge in die Ausnehmungen 48, 49 parallel zur Drehachse D eingelegt werden. Durch Drehen des Mitnehmers 18B um die Achse D wird diejenige Ausnehmung 48, 49, in die der Garnstrang eingelegt wurde, in den Bereich des Garnhalters 18A gedreht, sodass diese Ausnehmung 48, 49 von dem Garnhalter 18A klemmend abgedeckt ist und der Garnstrang zwischen den Mitnehmerscheiben 40 des Mitnehmers 18B und den Lamellen 51 des Garnhalters 18A geklemmt ist.

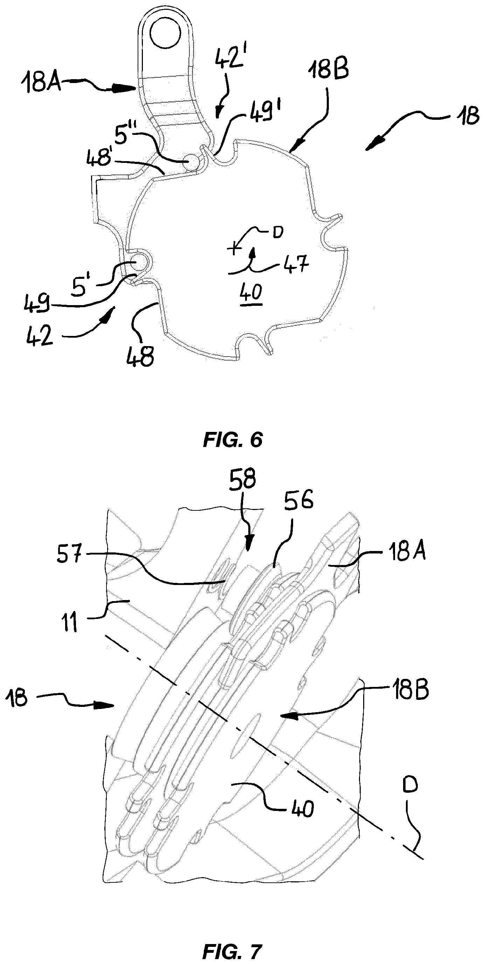

Figur 6 zeigt eine Frontansicht der Garnhalterung 18 mit dem Mitnehmer 18B und dem Garnhalter 18A gemäß der Figuren 4 bis 6. Ein erster Garnstrang sitzt mit einem ersten Ende 5' in der hinteren Ausnehmung 49 eines vorderen Ausnehmungspaars 42 und mit einem zweiten Ende 5" in der vorderen Ausnehmung 48' eines hinteren Ausnehmungspaars 42.

Die Mitnehmerscheibe 40 befindet sich in einer Drehposition, in der der Garnhalter die hintere Ausnehmung 49 des vorderen Ausnehmungspaars 42 sowie vordere Ausnehmung 48' des hinteren Ausnehmungspaares 42' klemmend überdeckt, sodass beide Enden 5', 5" des ersten Garnstrangs 5 gehalten sind. Die vordere Ausnehmung 48 des vorderen Ausnehmungspaars 42 sowie die hintere Ausnehmung 49' des hinteren Ausnehmungspaars 42' sind hierbei nicht vom Garnhalter 18A abgedeckt.

Figur 7 zeigt ein weiteres Ausführungsbeispiel einer Garnhalterung mit einer passiven Garnklemme 58, die auf einer vom Knoterhaken abgewandten Seite des Mitnehmers 18B angeordnet ist. Die Garnklemme 58 weist ein Klemmelement 56 sowie eine Druckfeder 57 auf. Das Klemmelement 56 ist gegen den Mitnehmer 18B axial parallel zur Achse D, um die der Mitnehmer 18B gedreht wird, abgestützt. Das Klemmelement 56 stützt sich hierbei im radialen Bereich der Ausnehmungspaare 42 des Mitnehmers 18B ab. Die Druckfeder 57 ist zwischen dem Knoterrahmen 11 und dem Klemmelement 56 abgestützt und beaufschlagt das Klemmelement 56 mit Kraft gegen den Mitnehmer 18B, sodass ein Garnstrang zwischen dem Klemmelement 56 und dem Mitnehmer 18B eingeklemmt werden kann. Die passive Garnklemme 58 erleichtert die Übergabe von Garn insbesondere zwischen der Bildung zweier Knoten bei einem Doppelknoter.

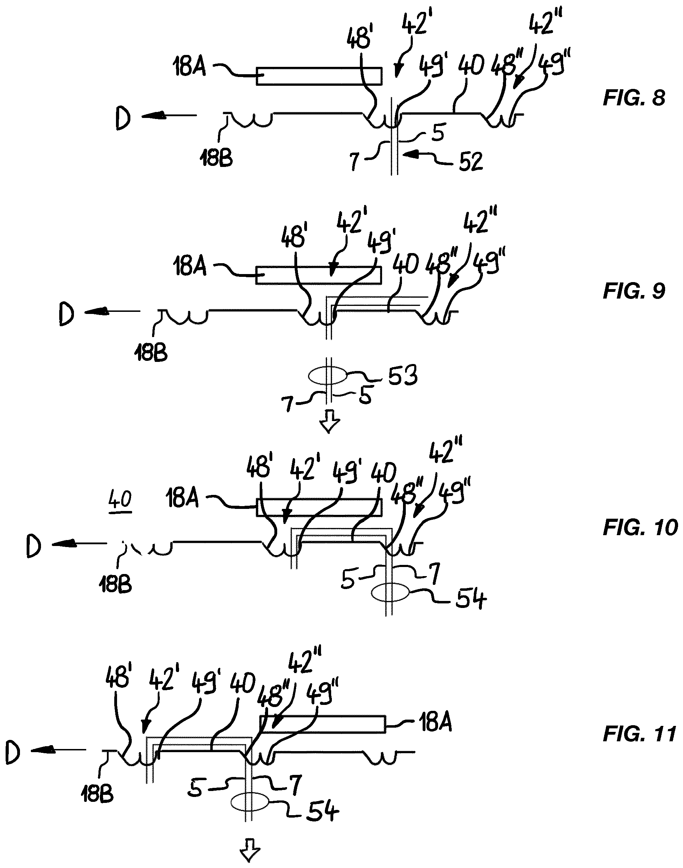

Die Figuren 8 bis 11 zeigen schematisch das Verfahren zur Bildung zweier Knoten mittels eines Garnknoters gemäß Figur 1, der als Doppelknoter ausgebildet ist. Die Figuren 8 bis 11 zeigen schematisch eine Abwicklung der Kontur der Außenumfangskante 50 einer der Mitnehmerscheiben 40 des Mitnehmers 18B gemäß der Figuren 3 und 4. Ferner zeigen sie schematisch den Garnhalter 18A zum Klemmen von Garnsträngen zwischen dem Garnhalter 18A und die Mitnehmer 18B.

Figur 8 zeigt den Zustand nach dem Zuführen eines einzelnen Garnstrangpaares 52 mittels einer Garnzuführeinrichtung in Form einer Pressennadel 6 (Figur 1) über den Knoterhaken in die hintere Ausnehmung 49' eines vorderen Ausnehmungspaares 42' der Ausnehmungspaare 42 gemäß der Figuren 3 und 4. Das einzelne Garnstrangpaar 52 ist aus dem ersten Garnstrang 5, der über die Oberseite des Pressballens 29 (Figur 1) verläuft, und dem zweiten Garnstrang 7, der von der Pressennadel 6 (Figur 1) nach oben befördert wurde, gebildet. Die hintere Ausnehmung 49' des vorderen Ausnehmungspaares 42' befindet sich hierbei in einer Einlegeposition kurz vor Erreichen des Garnhalters 18A.

Im weiteren Verlauf des Verfahrens wird der Mitnehmer 18B in Drehrichtung D gegenüber dem Garnhalter 18A gedreht. Dies entspricht einer Bewegung des Mitnehmers 18B gemäß der Abwicklungen nach den Figuren 8 bis 11 nach links in Pfeilrichtung. Hierbei erreicht die hintere Ausnehmung 49' des vorderen Ausnehmungspaares 42' einen Klemmpositionsbereich, in dem die hintere Ausnehmung 49' des vorderen Ausnehmungspaares 42' von dem Garnhalter 18A klemmend abgedeckt ist, sodass das Garnstrangpaar 52 zwischen dem Garnhalter 18A und dem Mitnehmer 18B geklemmt ist. Gleichzeitig wird der Knoterhaken um eine volle Umdrehung zur Bildung eines ersten Knotens 53 in dem einzelnen Garnstrangpaar 52 gedreht. Anschließend wird das einzelne Garnstrangpaar 52 zwischen dem Knoterhaken bzw. dem ersten Knoten 53 und der hinteren Ausnehmung 49' des vorderen Ausnehmungspaares 42' bzw. dem Mitnehmer 18B durchtrennt, solange die hintere Ausnehmung 49' des vorderen Ausnehmungspaares 42' vom Garnhalter 18A klemmend abgedeckt ist, also das Garnstrangpaar 52 geklemmt ist. Hiernach ergibt sich die Situation, wie sie in Figur 9 dargestellt ist. Der oben auf dem Pressballen 29 verlaufende Garnstrang 5 und der von unten kommende bzw. zugeführte Garnstrang 7 sind somit mittels des ersten Knotens 52 miteinander verbunden, sodass der Pressballen mit Garn umreift ist.

Zum Bilden eines zweiten Knotens 54 wird der Mitnehmer 18B weiter gedreht, bis die vordere Ausnehmung 48" des hinteren Ausnehmungspaares 42" die Einlegeposition erreicht, also eine Position kurz vor dem Garnhalter 18A erreicht. In dieser Position wird das einzelne Garnstrangpaar 52 mittels der Garnzuführeinrichtung in Form der beispielhaft gezeigten Pressennadel 6 (Figur 1) in die vordere Ausnehmung 48" des hinteren Ausnehmungspaares 42" eingelegt. Das Garnstrangpaar 52 verläuft somit ausgehend von einer Vorderseite des Mitnehmers 18B durch die hintere Ausnehmung 49' des vorderen Ausnehmungspaares 42' zu einer Rückseite des Mitnehmers 18B und von dort wieder durch die vordere Ausnehmung 48" des hinteren Ausnehmungspaares 42" zur Vorderseite. Dort wird durch Drehen des Knoterhakens um eine volle Umdrehung ein zweiter Knoten 54 in dem Garnstrangpaar 52 gebildet. Der Knoterhaken wird gedreht, solange zumindest eine der Ausnehmungen 49', 48", in denen das Garnstrangpaar 52 angeordnet ist, also die hintere Ausnehmung 49' des vorderen Ausnehmungspaares 42' oder die vordere Ausnehmung 48" des hinteren Ausnehmungspaares 42", vom Garnhalter 18A klemmend abgedeckt ist, um das Garnstrangpaar 52 zu klemmen. Eine beispielhafte Position ist in Figur 10 dargestellt.

Abschließend wird der Mitnehmer 18B gedreht, bis die vordere Ausnehmung 48" des hinteren Ausnehmungspaares 42" eine Freigabeposition erreicht hat, in der der Garnhalter 18A die vordere Ausnehmung 48" des hinteren Ausnehmungspaares 42" freigibt. In dieser Position wird dann das einzelne Garnstrangpaar 52 aus der Garnhalterung 18, welche den Garnhalter 18A und den Mitnehmer 18B umfasst, herausgezogen, wie dies in Figur 11 angedeutet ist. Somit wird eine neue Bindegarnschlaufe durch den oben liegenden ersten Garnstrang 5 und den unten liegenden zweiten Garnstrang 7 gebildet, in den ein neuer Pressballen eingepresst werden kann.

Da derjenige Teil des Garnstrangpaares 52, der sich auf der Rückseite des Mitnehmers 18B befindet, nicht vom zweiten Knoten 54 abgetrennt wird, sondern an dem zweiten Knoten 54 verbleibt, entsteht kein Garnrest, der frei wird und als Abfall auf das Pressgut fällt.

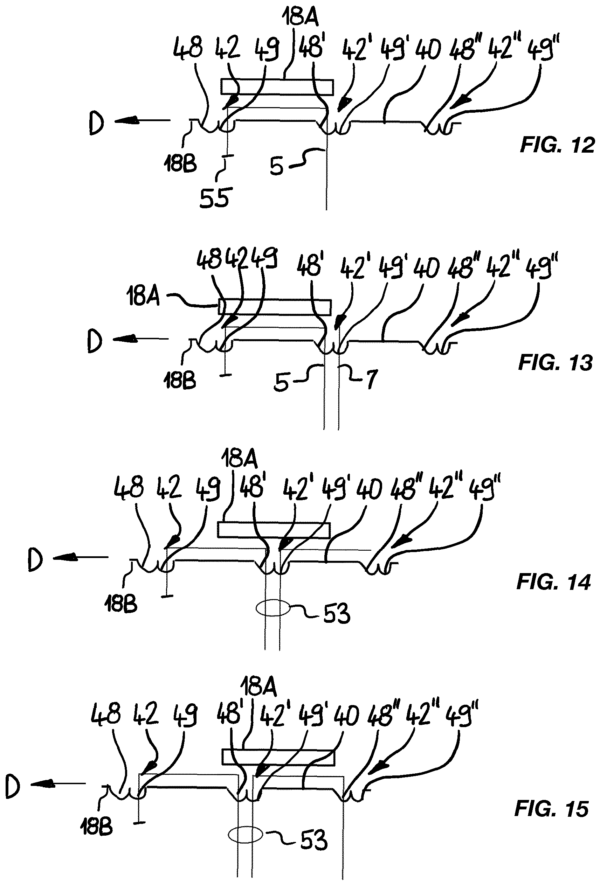

Die Figuren 12 bis 16 zeigen schematisch das Verfahren zur Bildung eines einzelnen Knotens mittels eines Garnknoters gemäß Figur 2. Der Doppelknoter gemäß Figur 1 weist zwei Verzahnungsabschnitte 23, 25 zum Antreiben des Knoterhakens 9 und zwei Verzahnungsabschnitte 24, 26 zum Antreiben des Mitnehmers 18B auf. Somit vollzieht der Knoterhaken 9 bei einer vollen Umdrehung der Antriebsscheibe 20 um die Achse A zwei volle Umdrehungen zur Bildung von zwei Knoten. Entsprechend wird der Mitnehmer 18B angetrieben. Im Unterschied dazu weist der Einfachknoter gemäß Figur 2 nur zwei der Verzahnungsabschnitte 25, 26 auf, sodass bei einer vollen Umdrehung der Antriebsscheibe 20 der Knoterhaken 9 eine vollständige Umdrehung vollzieht, um einen Knoten zu bilden. Entsprechend wird der Mitnehmer 18B ebenfalls parallel zur Knotenbildung nur einmal angetrieben. Darüber hinaus ist der erste Garnstrang 5 nicht in vom Garnknoter separaten Mitteln bzw. in einer separaten Haltevorrichtung geklemmt, während der Pressballen gebildet wird. Beim Einfachknoter wird der erste Garnstrang 5 von der Garnhalterung 18 geklemmt, während der Pressballen gebildet wird.

Die Figuren 12 bis 16 zeigen schematisch eine Abwicklung der Kontur der Außenumfangskante 50 einer der Mitnehmerscheiben 40 des Mitnehmers 18B gemäß der Figuren 3 und 4. Ferner zeigen sie schematisch den Garnhalter 18A zum Klemmen von Garnsträngen 5, 7 zwischen dem Garnhalter 18A und die Mitnehmer 18B.

Figur 12 zeigt die Situationen der Garnhalterung mit Garnhalter 18A und Mitnehmer 18B nachdem ein erster einzelne Garnstrang 5 über den Knoterhaken gemäß Figur 1 zu einem Gebinde (zum Beispiel Pressballen) geführt ist, wobei der erste einzelne Garnstrang 5 in der vorderen Ausnehmung 48' des vorderen Ausnehmungspaares 42' eingelegt und zwischen dem Mitnehmer 18A und dem Garnhalter 18B geklemmt ist. Der erste Garnstrang 5 befindet sich hierbei noch von einer vorhergehenden Knotenbildung in dieser Position und wird klemmend gehalten. Hierbei befindet sich ein abgeschnittenes Ende 55 des ersten Garnstrangs 5 auf einer Vorderseite des Mitnehmers 18B. Der erste Garnstrang 5 ist ausgehend von dem abgeschnittenen Ende 55 durch die hintere Ausnehmung 49 eines dem vorderen Ausnehmungspaares 42' voreilenden Ausnehmungspaares 42 eingelegt und zu einer Rückseite des Mitnehmers 18B geführt. Von dort ist der erste Garnstrang 5 wieder durch die vordere Ausnehmung 48' des vorderen Ausnehmungspaares 42' zur Vorderseite des Mitnehmers 18B geführt und zwischen dem Garnhalter 18A und dem Mitnehmer 18B geklemmt.

Anschließend wird ein zweiter einzelner Garnstrang 7 mittels einer Garnzuführeinrichtung in Form zum Beispiel einer Pressennadel über den Knoterhaken in die hintere Ausnehmung 49' des vorderen Ausnehmungspaares 42' eingelegt. Hierbei befindet sich, wie dies in Figur 13 dargestellt ist, die hintere Ausnehmung 49' des vorderen Ausnehmungspaares 42' in einer Einlegeposition kurz vor Erreichen des Garnhalters 18A.

Anschließend wird der Mitnehmer 18B gedreht, bis die hintere Ausnehmung 49' des vorderen Ausnehmungspaares 42' einen Klemmpositionsbereich erreicht, in dem der Garnhalter 18A die hintere Ausnehmung 49' des vorderen Ausnehmungspaares 42' abdeckt. Während sich die hintere Ausnehmung 49' des vorderen Ausnehmungspaares 42' im Klemmpositionsbereich befindet, wird der Knoterhaken um eine volle Umdrehung zur Bildung eines gemeinsamen Knotens 53 in dem ersten Garnstrang 5 und den zweiten Garnstrang 7 gedreht. Diese Situation ist in Figur 14 dargestellt.

Daraufhin wird der Mitnehmer 18B weiter gedreht, bis die vordere Ausnehmung 48" des hinteren Ausnehmungspaares 42" die Einlegeposition kurz vor Erreichen des Garnhalters 18A erreicht. In dieser Position wird der zweite einzelne Garnstrang 7 mittels der Pressennadel in die vordere Ausnehmung 48" des hinteren Ausnehmungspaares 42" eingelegt. Der zweite einzelne Garnstrang 7 verläuft somit ausgehend vom Knoten 53 von einer Vorderseite des Mitnehmers 18B durch die hintere Ausnehmung 49' des vorderen Ausnehmungspaares 42' zu einer Rückseite des Mitnehmers 18B und wieder zurück zur Vorderseite durch die vordere Ausnehmung 48" des hinteren Ausnehmungspaares 42". Diese Situation ist in Figur 15 dargestellt.

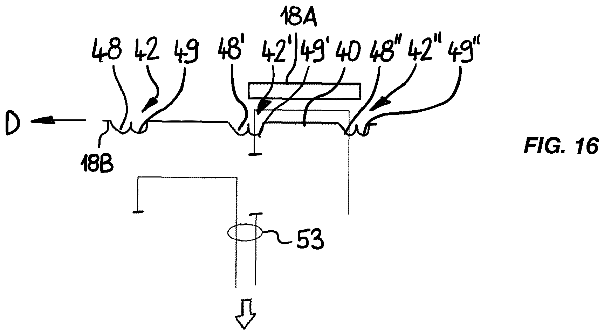

Im Anschluss wird der Mitnehmer 18B weiter gedreht, bis die vordere Ausnehmung 48' des vorderen Ausnehmungspaares 42' eine Freigabeposition erreicht, in der der Garnhalter 18B die vordere Ausnehmung 48' des vorderen Ausnehmungspaares 42' freigibt und die vordere Ausnehmung 48" des hinteren Ausnehmungspaares 42" den Klemmpositionsbereich erreicht hat. In dieser Position wird der zweite Garnstrang 7 zwischen dem Knoterhaken bzw. dem Knoten 53 und der Garnhalterung bzw. dem Mitnehmer 18B mittels des Garnmessers durchtrennt und der erste Garnstrang 5 aus der Garnhalterung 18 mittels des Garnmessers herausgezogen, wie dies in Figur 16 schematisch dargestellt ist. Da der zweite Garnstrang 7 in der Garnhalterung geklemmt ist, kann dieser mittels des Garnmessers durchtrennt werden. Da der erste Garnstrang 5 nicht mehr von der Garnhalterung 18 geklemmt ist, wird dieser nicht vom Garnmesser durchtrennt, sondern aus der Garnhalterung herausgezogen. Derjenige Teil des ersten Garnstrangs 5, der sich auf der Rückseite des Mitnehmers 18B befand, wird somit nicht vollständig abgetrennt und fällt nicht als Abfall zu Boden, sondern verbleibt am Knoten 53. Vorzugsweise wird dieser Teil des ersten Garnstrangs 5 teilweise durch den Knoten 53 hindurch gezogen, sodass sich eine Schlaufe bildet. Das abgeschnittene Ende des zweiten Garnstrangs 7, das sich noch an dem Knoten 53 befindet, wird vorzugsweise vollständig durch den Knoten 53 hindurch gezogen.

### Bezugszeichenliste

- 1: Wandung
- 2: Pressenkanal
- 3: Förderrichtung
- 4: Knoterwelle
- 5: erster Garnstrang
- 6: Pressennadel
- 7: zweiter Garnstrang
- 8: Pfeil
- 9: Knoterhaken
- 10: Garnknoter
- 11: Knoterrahmen
- 12: Ritzel
- 13: Garnmesser
- 14: Messerhebel
- 15: Wellenzapfen
- 16: Rolle
- 17: Nut
- 18: Garnhalterung
- 18A: Garnhalter
- 18B: Mitnehmer
- 19: Ritzel
- 20: Antriebsscheibe
- 21: Schnecke
- 22: Ritzel
- 23: Verzahnungsabschnitt (Knoterhakenverzahnungsabschnitt)
- 24: Verzahnungsabschnitt (Mitnehmerverzahnungsabschnitt)
- 25: Verzahnungsabschnitt (Knoterhakenverzahnungsabschnitt)
- 26: Verzahnungsabschnitt (Mitnehmerverzahnungsabschnitt)
- 27: Hakenteil
- 28: Knoterzunge
- 29: Pressballen
- 30: Ritzelwelle
- 39: Schaft
- 40: Mitnehmerscheibe
- 41: zahnfreie Unterbrechung
- 42: Ausnehmungspaar
- 42': vorderes Ausnehmungspaar
- 42": hinteres Ausnehmungspaar
- 43: Schwenkachse
- 44: zahnfreie Unterbrechung
- 45: Zungenrolle
- 46: Nockenfläche
- 47: Drehrichtung
- 48: vordere Ausnehmung
- 48': vordere Ausnehmung des vorderen Ausnehmungspaares
- 48": vordere Ausnehmung des hinteren Ausnehmungspaares
- 49: hintere Ausnehmung
- 49': hintere Ausnehmung des vorderen Ausnehmungspaares
- 49": hintere Ausnehmung des hinteren Ausnehmungspaares
- 50: Außenumfangskante
- 51: Lamelle
- 52: Garnstrangpaar
- 53: erster Knoten
- 54: zweiter Knoten
- 55: Ende
- 56: Klemmelement
- 57: Druckfeder
- 58: Garnklemme

- A: Achse
- D: Achse

## Patentansprüche

1. Garnknoter (10) umfassend:
einen Knoterhaken (9) zur Bildung eines Knotens (53) in einem Garn,
eine Garnhalterung (18) zum Klemmen von Garn mit einem Garnhalter (18A),
wobei der Garnhalter (18A) über einen Teilumfang des Mitnehmers (18B) mit diesem klemmend in Wirkverbindung steht, und einen relativ zum Garnhalter (18A) drehbaren Mitnehmer (18B), wobei der Mitnehmer (18B) über den Umfang mindestens zwei Ausnehmungspaare (42, 42', 42") aufweist mit jeweils einer in einer Drehrichtung (D) des Mitnehmers (18B) vorderen Ausnehmung (48, 48', 48") zur Aufnahme eines einzelnen Garnstrangs (5, 7) oder eines einzelnen Garnstrangpaares (52) und einer hinteren Ausnehmung (49, 49', 49") zur Aufnahme eines weiteren einzelnen Garnstrangs (5, 7) oder des einzelnen Garnstrangpaares (52),
eine Garnzuführeinrichtung (6) zum Zuführen von Garn über den Knoterhaken (9) in die Garnhalterung (18) und
ein Garnmesser (13) zum Durchtrennen von Garn,
**dadurch gekennzeichnet,**
**dass** der Garnhalter (18A) über den Umfang des Mitnehmers (18B) eine derartige Länge aufweist, dass zumindest in einer Drehposition des Mitnehmers (18B) relativ zum Garnhalter (18A) der Garnhalter (18A) die hintere Ausnehmung (49') eines in Drehrichtung vorderen Ausnehmungspaares (42') und die vordere Ausnehmung (48") eines in Drehrichtung folgenden hinteren Ausnehmungspaares (42") klemmend abdeckt und die vordere Ausnehmung (48') des vorderen Ausnehmungspaares (42') freigibt.

2. Garnknoter (10) nach Anspruch 1,
**dadurch gekennzeichnet,**
**dass** über den Umfang des Mitnehmers (18B) der Abstand zwischen der vorderen Ausnehmung (48, 48', 48") und der hinteren Ausnehmung (49, 49', 49") eines Ausnehmungspaares (42, 42', 42") geringer ist als der Abstand zwischen zwei über den Umfang benachbarten Ausnehmungspaaren (42, 42', 42").

3. Garnknoter nach einem der Ansprüche 1 oder 2,
**dadurch gekennzeichnet,**
**dass** der Garnknoter (10) ferner eine Garnklemme (58) aufweist, die auf einer vom Knoterhaken (9) abgewandten Seite des Mitnehmers (18B) angeordnet ist und dazu dient, Garn zwischen der hintere Ausnehmung (49') des vorderen Ausnehmungspaares (42') und der vorderen Ausnehmung (48") des hinteren Ausnehmungspaares (42") zu klemmen.

4. Garnknoter nach einem der Ansprüche 1 bis 3,
**dadurch gekennzeichnet,**
**dass** die vorderen Ausnehmungen (48, 48', 48") der Ausnehmungspaare (42, 42', 42") sich über einen größeren Teilumfang des Mitnehmers (18B) erstrecken als die hinteren Ausnehmungen (49, 49', 49").

5. Garnknoter nach einem der Ansprüche 1 bis 4,
**dadurch gekennzeichnet,**
**dass** der Garnknoter (10) vier Ausnehmungspaare (42, 42', 42") aufweist, die über den Umfang des Mitnehmers (18B) gleichmäßig verteilt angeordnet sind.

6. Garnknoter (10) nach Anspruch 1 bis 5,
**dadurch gekennzeichnet,**
**dass** der Garnknoter (10) ferner zum Bilden eines Knotens (53, 54) eine drehend antreibbare Antriebsscheibe (20) mit zumindest einer Gruppe von Verzahnungsabschnitten (23, 24, 25, 26) zum intermittierenden Antreiben des Knoterhakens (9) und des Mitnehmers (18B) aufweist,
**dass** die zumindest eine Gruppe von Verzahnungsabschnitten (23, 24, 25, 26) einen Knoterhakenverzahnungsabschnitt (23, 25) und einen Mitnehmerverzahnungsabschnitt (24, 26) mit jeweils mehreren Zähnen aufweist, und dass der Mitnehmerverzahnungsabschnitt (24, 26) über den Umfang eine zahnfreie Unterbrechung (41, 44) aufweist.

7. Garnknoter nach Anspruch 6,
**dadurch gekennzeichnet,**
**dass** zum drehenden Antreiben die Zähne des Knoterhakenverzahnungsabschnitt (23, 25) mit einem Ritzel (12) des Knoterhakens (9) kämmen, und dass zum drehenden Antreiben die Zähne des Mitnehmerverzahnungsabschnitt (24, 26) mit einem Ritzel (22) des Mitnehmers (18B) kämmen.

8. Garnknoter nach Anspruch 6 oder 7,
**dadurch gekennzeichnet,**
**dass** die Antriebsscheibe (20) zwei Gruppen von Verzahnungsabschnitten (23, 24, 25, 26) zum Bilden zweier Knoten (53, 54) aufweist.

9. Garnknoter nach Anspruch 6 oder 7,
**dadurch gekennzeichnet,**
**dass** die Antriebsscheibe (20) eine Gruppe von Verzahnungsabschnitten (23, 24, 25, 26) zum Bilden eines Knotens (53) aufweist.

10. Verfahren zur Bildung zweier Knoten (53, 54) mittels eines Garnknoters (10) nach Anspruch 8, wobei das Verfahren folgenden Verfahrensablauf aufweist:
1. Zuführen eines einzelnen Garnstrangpaares (52) mittels der Garnzuführeinrichtung (6) über den Knoterhaken (9) in die hintere Ausnehmung (49') des vorderen Ausnehmungspaares (42'),
2. Drehen des Mitnehmers (18B) bis die hintere Ausnehmung (49') des vorderen Ausnehmungspaares (42') einen Klemmpositionsbereich erreicht, in dem der Garnhalter (18A) die hintere Ausnehmung (49') des vorderen Ausnehmungspaares (42') klemmend abdeckt, und gleichzeitiges Drehen des Knoterhakens (9) um eine volle Umdrehung zur Bildung eines ersten Knotens (53) in das einzelne Garnstrangpaar (52),
3. Durchtrennen des einzelnen Garnstrangpaares (52) zwischen dem Knoterhaken (9) und der hinteren Ausnehmung (49') des vorderen Ausnehmungspaares (42') der Garnhalterung (18) mittels des Garnmessers (13) während die hintere Ausnehmung (49') des vorderen Ausnehmungspaares (42') vom Garnhalter (18A) klemmend abgedeckt ist,
4. Weiterdrehen des Mitnehmers (18B) bis die vordere Ausnehmung (48") des hinteren Ausnehmungspaares (42") die Einlegeposition erreicht,
5. Zuführen des einzelnen Garnstrangpaares (52) mittels der Garnzuführeinrichtung (6) in die vordere Ausnehmung (48") des hinteren Ausnehmungspaares (42"),
6. Drehen des Knoterhakens (9) um eine volle Umdrehung zum Bilden eines zweiten Knotens (54) in dem einzelnen Garnstrangpaar (52) solange zumindest eine der hinteren Ausnehmung (49') des vorderen Ausnehmungspaares (42') und vorderen Ausnehmung (48") des hinteren Ausnehmungspaares (42") vom Garnhalter (18A) klemmend abgedeckt ist,
7. Drehen des Mitnehmers (18B) bis die vordere Ausnehmung (48") des hinteren Ausnehmungspaares (42") eine Freigabeposition erreicht hat, in der der Garnhalter (18A) die vordere Ausnehmung (48") des hinteren Ausnehmungspaares (42") freigibt, und
8. Herausziehen des einzelnen Garnstrangpaares (52) aus der Garnhalterung (18) mittels des Garnmessers (13).

11. Verfahren zur Bildung eines Knotens (53) mittels eines Garnknoters (10) nach Anspruch 9, wobei das Verfahren folgenden Verfahrensablauf aufweist:
1. Führen eines ersten einzelnen Garnstrangs (5) über den Knoterhaken (9) zu einem Gebinde (29), wobei der erste einzelne Garnstrang (5) in der vordere Ausnehmung (48') des vorderen Ausnehmungspaares (42') zwischen dem Mitnehmer (18B) und dem Garnhalter (18A) geklemmt ist,
2. Zuführen eines zweiten einzelnen Garnstrangs (7) mittels der Garnzuführeinrichtung (6) über den Knoterhaken (9) in die hintere Ausnehmung (49') des vorderen Ausnehmungspaares (42'),
3. Drehen des Mitnehmers (18B) bis die hintere Ausnehmung (49') des vorderen Ausnehmungspaares (42') einen Klemmpositionsbereich erreicht, in dem der Garnhalter (18A) die hintere Ausnehmung (49') des vorderen Ausnehmungspaares (42') klemmend abdeckt, und gleichzeitiges Drehen des Knoterhakens (9) um eine volle Umdrehung zur Bildung eines gemeinsamen Knotens (53) in beide Garnstränge (5, 7),
4. Weiterdrehen des Mitnehmers (18B) bis die vordere Ausnehmung (48") des hinteren Ausnehmungspaares (42") die Einlegeposition erreicht,
5. Zuführen des zweiten einzelnen Garnstrangs (7) mittels der Garnzuführeinrichtung (6) in die vordere Ausnehmung (48") des hinteren Ausnehmungspaares (42"),
6. Drehen des Mitnehmers (18B) bis die vordere Ausnehmung (48') des vorderen Ausnehmungspaares (42') eine Freigabeposition erreicht, in der der Garnhalter (18A) die vordere Ausnehmung (48') des vorderen Ausnehmungspaares (42') freigibt, und die vordere Ausnehmung (48") des hinteren Ausnehmungspaares (42") den Klemmpositionsbereich erreicht,
7. Durchtrennen des zweiten Garnstrangs (7) zwischen dem Knoterhaken (9) und der Garnhalterung (18) mittels des Garnmessers (13) und
8. Herausziehen des ersten Garnstrangs (5) aus der Garnhalterung (18) mittels des Garnmessers (13).

## Claims

1. Twine knotter (10) comprising:
a bill hook (9) for forming a knot (53) in a twine,
a twine holding device (18) for clamping twine with a twine holder (18A), the twine holder (18A) is engaged with the twine disk (18B) in a clamping manner over a partial circumference of the twine disk (18B), and a twine disk (18B) rotatable relative to the twine holder (18A), the twine disk (18B) having at least two pairs of recesses (42, 42', 42") over the circumference with in each case a front recess (48, 48', 48") in a direction of rotation (D) of the twine disk (18B) for receiving a single twine strand (5, 7) or a single twine strand pair (52) and a rear recess (49, 49', 49") for receiving a further single twine strand (5, 7) or the single twine strand pair (52),
a twine feeding device (6) for feeding twine over the bill hook (9) into the twine holding device (18), and
a twine knife (13) for cutting twine,
**characterized in**
**that** the twine holder (18A) has such a length over the circumference of the twine disk (18B) that, at least in a rotational position of the twine disk (18B) relative to the twine holder (18A), the twine holder (18A) clampingly covers the rear recess (49') of a front pair of recesses (42') that is in the front in the direction of rotation and the front recess (48") of a rear pair of recesses (42") that follows in the direction of rotation and exposes the front recess (48') of the front pair of recesses (42').

2. Twine knotter (10) according to claim 1,
**characterized in**
**that**, over the circumference of the twine disk (18B), the distance between the front recess (48, 48', 48") and the rear recess (49, 49', 49") of a pair of recesses (42, 42', 42") is smaller than the distance between two pairs of recesses (42, 42', 42") adjacent over the circumference.

3. Twine knotter according to one of claims 1 or 2,
**characterized in**
**that** the twine knotter (10) further comprises a twine clamp (58) arranged on a side of the twine disk (18B) facing away from the bill hook (9) and serving to clamp twine between the rear recess (49') of the front pair of recesses (42') and the front recess (48") of the rear pair of recesses (42").

4. Twine knotter according to one of claims 1 to 3,
**characterized in**
**that** the front recesses (48, 48', 48") of the pairs of recesses (42, 42', 42") extend over a larger partial circumference of the twine disk (18B) than the rear recesses (49, 49', 49").

5. Twine knotter according to one of claims 1 to 4,
**characterized in**
**that** the twine knotter (10) has four pairs of recesses (42, 42', 42") which are arranged uniformly distributed over the circumference of the twine disk (18B).

6. Twine knotter (10) according to one of claims 1 to 5,
**characterized in**
**that** the twine knotter (10) further comprises, for forming a knot (53, 54), a rotationally drivable drive disk (20) with at least one group of toothing sections (23, 24, 25, 26) for intermittently driving the bill hook (9) and the twine disk (18B), that the at least one group of toothing sections (23, 24, 25, 26) has a bill hook toothing section (23, 25) and a twine disk toothing section (24, 26) each having a plurality of teeth, and
**that** the twine disk toothing section (24, 26) has a toothless interruption (41, 44) over the circumference.

7. Twine knotter according to claim 6,
**characterized in**
**that**, for driving in rotation, the teeth of the bill hook toothing section (23, 25) mesh with a pinion (12) of the bill hook (9), and
**that** for driving rotationally, the teeth of the twine disk toothing portion (24, 26) mesh with a pinion (22) of the twine disk (18B).

8. Twine knotter according to claim 6 or 7,
**characterized in**
**that** the drive disk (20) has two groups of toothing sections (23, 24, 25, 26) for forming two knots (53, 54).

9. Twine knotter according to claim 6 or 7,
**characterized in**
**that** the drive disk (20) has a group of toothing sections (23, 24, 25, 26) for forming a knot (53).

10. Method of forming two knots (53, 54) by means of a twine knotter (10) according to claim 8, the method comprising the following sequence of method steps:
1. Feeding a single pair of twine strands (52) by means of the twine feeding device (6) over the bill hook (9) into the rear recess (49') of the front pair of recesses (42'),
2. Rotating the twine disk (18B) until the rear recess (49') of the front pair of recesses (42') reaches a clamping position range in which the twine holder (18A) covers the rear recess (49') of the front pair of recesses (42') in a clamping manner, and simultaneously rotating the bill hook (9) by one full revolution to form a loop for a first knot (53) into the single twine strand pair (52),
3. Cutting through the individual twine strand pair (52) between the bill hook (9) and the rear recess (49') of the front pair of recesses (42') of the twine holding device (18) by means of the twine knife (13) while the rear recess (49') of the front pair of recesses (42') is covered by the twine holder (18A) in a clamping manner,
4. Continue turning the twine disk (18B) until the front recess (48") of the rear pair of recesses (42") reaches the insertion position,
5. Feeding the individual twine strand pair (52) by means of the twine feeding device (6) into the front recess (48") of the rear pair of recesses (42")
6. Rotating the bill hook (9) by one full turn to form a loop for a second knot (54) in the single twine strand pair (52) as long as at least one of the rear recess (49') of the front pair of recesses (42') and front recess (48") of the rear pair of recesses (42") is clamped by the twine holder (18A),
7. Rotating the twine disk (18B) until the front recess (48") of the rear pair of recesses (42") has reached a release position in which the twine holder (18A) releases the front recess (48") of the rear pair of recesses (42"), and
8. Pulling out the individual twine strand pair (52) from the twine holding device (18) by means of the twine knife (13).

11. Method of forming a knot (53) by means of a twine knotter (10) according to claim 9, the method comprising the following sequence of method steps:
1. Guiding a first individual twine strand (5) over the bill hook (9) to a bundle (29), wherein the first individual twine strand (5) is clamped in the front recess (48') of the front pair of recesses (42') between the twine disk (18B) and the twine holder (18A),
2. Feeding a second individual twine strand (7) by means of the twine feeding device (6) over the bill hook (9) into the rear recess (49') of the front pair of recesses (42'),
3. Rotating the twine disk (18B) until the rear recess (49') of the front pair of recesses (42') reaches a clamping position range in which the twine holder (18A) covers the rear recess (49') of the front pair of recesses (42') in a clamping manner, and simultaneously rotating the bill hook (9) by one full turn to form a loop for a common knot (53) in both twine strands (5, 7),
4. Continue turning the twine disk (18B) until the front recess (48") of the rear pair of recesses (42") reaches the insertion position,
5. Feeding the second individual twine strand (7) by means of the twine feeding device (6) into the front recess (48") of the rear pair of recesses (42")
6. Rotating the twine disk (18B) until the front recess (48') of the front pair of recesses (42') reaches a release position in which the twine holder (18A) releases the front recess (48') of the front pair of recesses (42'), and the front recess (48") of the rear pair of recesses (42") reaches the clamping position range,
7. Cutting through the second twine strand (7) between the bill hook (9) and the twine holding device (18) by means of the twine knife (13) and
8. Pulling out the first twine strand (5) from the twine holding device (18) by means of the twine knife (13).

## Revendications

1. Noueur de fil (10), comprenant :
un crochet de noueur (9), destiné à créer nœud (53) dans un fil,
un support de fil (18), destiné à serrer du fil, doté d'un porte-fil (18A), le porte-fil (18A) étant en liaison active par serrage par l'intermédiaire d'une périphérie partielle de l'entraîneur (18B) avec ce dernier, et un entraîneur (18B) rotatif par rapport au porte-fil (18A), l'entraîneur (18B) comportant sur la périphérie au moins deux paires d'évidements (42, 42', 42") dotées chacune d'un évidement (48, 48', 48") antérieur dans le sens de rotation (D) de l'entraîneur (18B), dévolu au logement d'un écheveau de fil (5, 7) individuel ou d'une paire individuelle d'écheveaux de fil (52) et d'un évidement (49, 49', 49") postérieur, dévolu au logement d'un écheveau de fil (5, 7) individuel supplémentaire ou de la paire individuelle d'écheveaux de fil (52),
un système d'alimentation du fil (6), dévolu à l'alimentation de fil par l'intermédiaire du crochet de noueur (9) dans le support de fil (18) et
un couteau coupe-fil (13), destiné à sectionner du fil,
**caractérisé en ce que**
le porte-fil (18A) présente sur la périphérie de l'entraîneur (18B) une longueur telle qu'au moins dans une position en rotation de l'entraîneur (18B) par rapport au porte-fil (18A), le porte-fil (18A) recouvre par serrage l'évidement (49') postérieur d'une paire d'évidements (42') antérieure dans le sens de rotation et l'évidement (48") antérieur d'une paire d'évidements (42") postérieure suivante dans le sens de rotation et libère l'évidement (48') antérieur de la paire d'évidements (42') antérieure.

2. Noueur de fil (10) selon la revendication 1,
**caractérisé en ce que**
sur la périphérie de l'entraîneur (18B), l'écart entre l'évidement (48, 48', 48") antérieur et l'évidement (49, 49', 49") postérieur d'une paire d'évidements (42, 42', 42") est inférieur à l'écart entre deux paires d'évidements (42, 42', 42") voisines sur la périphérie.

3. Noueur de fil selon l'une quelconque des revendications 1 ou 2,
**caractérisé en ce que**
le noueur de fil (10) comporte par ailleurs un pincefil (58) qui est placé sur un côté de l'entraîneur (18B) qui est opposé au crochet de noueur (9) et qui sert à pincer du fil entre l'évidement (49') postérieur de la paire d'évidements (42') antérieure et l'évidement (48") antérieur de la paire d'évidements (42") postérieure.

4. Noueur de fil selon l'une quelconque des revendications 1 à 3,
**caractérisé en ce que**
les évidements (48, 48', 48") antérieurs des paires d'évidements (42, 42', 42") s'étendent sur une périphérie partielle de l'entraîneur (18B) supérieure à celle des évidements (49, 49', 49") postérieurs.

5. Noueur de fil selon l'une quelconque des revendications 1 à 4,
**caractérisé en ce que**
le noueur de fil (10) comporte quatre paires d'évidements (42, 42', 42") qui sont placées en distribution régulière sur la périphérie de l'entraîneur (18B).

6. Noueur de fil (10) selon la revendication 1 à 5,
**caractérisé en ce que**
le noueur de fil (10) comporte par ailleurs, pour créer un nœud (53, 54) un disque d'entraînement (20) susceptible d'être entraîné en rotation, doté d'au moins un groupe de segments dentés (23, 24, 25, 26), assurant l'entraînement intermittent du crochet de noueur (9) et de l'entraîneur (18B),
**en ce que** l'au moins un groupe de segments dentés (23, 24, 25, 26) comporte un segment denté dédié au crochet de noueur (23, 25) et un segment denté dédié à l'entraîneur (24, 26), dotés chacun de plusieurs dents, et
**en ce que** le segment denté dédié à l'entraîneur (24, 26) comporte sur la périphérie des interruptions (41, 44) exemptes de dents.

7. Noueur de fil selon la revendication 6,
**caractérisé en ce que**
pour l'entraînement en rotation, les dents du segment denté dédié au crochet de noueur (23, 25) s'engrènent dans un pignon (12) du crochet de noueur (9), et
**en ce que** pour l'entraînement en rotation, les dents du segment denté dédié à l'entraîneur (24, 26) s'engrènent dans un pignon (22) de l'entraîneur (18B).

8. Noueur de fil selon la revendication 6 ou 7,
**caractérisé en ce que**
le disque d'entraînement (20) comporte deux groupes de segments dentés (23, 24, 25, 26), destinés à créer deux nœuds (53, 54).

9. Noueur de fil selon la revendication 6 ou 7,
**caractérisé en ce que**
le disque d'entraînement (20) comporte un groupe de segments dentés (23, 24, 25, 26), destiné à créer un nœud (53).

10. Procédé, destiné à créer deux nœuds (53, 54) à l'aide d'un noueur de fil (10) selon la revendication 8, le procédé présentant le déroulement suivant, consistant à :
1. alimenter une paire individuelle d'écheveaux de fil (52) à l'aide du système d'alimentation du fil (6), par l'intermédiaire du crochet de noueur (9) dans l'évidement (49') postérieur de la paire d'évidements (42') antérieure,
2. faire tourner l'entraîneur (18B) jusqu'à ce que l'évidement (49') postérieur de la paire d'évidements (42') antérieure atteigne une zone de position de serrage, dans laquelle le porte-fil (18A) recouvre par serrage l'évidement (49') postérieur de la paire d'évidements (42') antérieure, et faire tourner simultanément le crochet de noueur (9) d'un tour complet, pour créer un premier nœud (53) dans la paire individuelle d'écheveaux de fil (52),
3. sectionner la paire individuelle d'écheveaux de fil (52) entre le crochet de noueur (9) et l'évidement (49') postérieur de la paire d'évidements (42') antérieure du support de fil (18) à l'aide du couteau coupe-fil (13) pendant que l'évidement (49') postérieur de la paire d'évidements (42') antérieure est recouverte par serrage par le porte-fil (18A),
4. continuer à faire tourner l'entraîneur (18B) jusqu'à ce que l'évidement (48") antérieur de la paire d'évidements (42") postérieure atteigne la position d'insertion,
5. alimenter la paire individuelle d'écheveaux de fil (52) à l'aide du système d'alimentation du fil (6) dans l'évidement (48") antérieur de la paire d'évidements (42") postérieure,
6. faire tourner le crochet de noueur (9) d'un tour complet, pour créer un deuxième nœud (54) dans la paire individuelle d'écheveaux de fil (52) aussi longtemps qu'au moins l'un parmi l'évidement (49') postérieur de la paire d'évidements (42') antérieure et l'évidement (48") antérieur de la paire d'évidements (42") postérieure est recouverte par serrage par le porte-fil (18A),
7. faire tourner l'entraîneur (18B) jusqu'à ce que l'évidement (48") antérieur de la paire d'évidements (42") postérieure atteigne une position de libération, dans laquelle le porte-fil (18A) libère l'évidement (48") antérieur de la paire d'évidements (42") postérieure, et
8. tirer la paire individuelle d'écheveaux de fil (52) hors du support de fil (18) à l'aide du couteau coupe-fil (13).

11. Procédé, destiné à créer un nœud (53) à l'aide d'un noueur de fil (10) selon la revendication 9, le procédé présentant le déroulement suivant, consistant à :
1. guider un premier écheveau de fil (5) individuel par l'intermédiaire du crochet de noueur (9) vers un contenant (29), le premier écheveau de fil (5) individuel étant serré dans l'évidement (48') antérieur de la paire d'évidements (42') antérieure, entre l'entraîneur (18B) et le porte-fil (18A),
2. alimenter un deuxième écheveau de fil (7) individuel à l'aide du système d'alimentation du fil (6) par l'intermédiaire du crochet de noueur (9) dans l'évidement (49') postérieur de la paire d'évidements (42') antérieure,
3. faire tourner l'entraîneur (18B) jusqu'à ce que l'évidement (49') postérieur de la paire d'évidements (42') antérieure atteigne une zone de position de serrage, dans laquelle le porte-fil (18A) recouvre par serrage l'évidement (49') postérieur de la paire d'évidements (42') antérieure, et faire tourner simultanément le crochet de noueur (9) d'un tour complet, pour créer un nœud (53) commun dans les deux écheveaux de fil (5, 7),
4. continuer à faire tourner l'entraîneur (18B) jusqu'à ce que l'évidement (48") antérieur de la paire d'évidements (42") postérieure atteigne la position d'insertion,
5. alimenter le deuxième écheveau de fil (7) individuel à l'aide du système d'alimentation du fil (6) dans l'évidement (48") antérieur de la paire d'évidements (42") postérieure,
6. faire tourner l'entraîneur (18B) jusqu'à ce que l'évidement (48') antérieur de la paire d'évidements (42') antérieure atteigne une position de libération, dans laquelle le porte-fil (18A) libère l'évidement (48') antérieur de la paire d'évidements (42') antérieure, et que l'évidement (48") antérieur de la paire d'évidements (42") postérieure atteigne la zone de position de serrage,
7. sectionner le deuxième écheveau de fil (7) entre le crochet de noueur (9) et le support de fil (18) à l'aide du couteau coupe-fil (13) et
8. tirer le premier écheveau de fil (5) hors du support de fil (18) à l'aide du couteau coupe-fil (13) .
